(19) Europäisches Patentamt
European Patent Office
Office européen des brevets

(11) EP 2 595 847 B1

(12) EUROPÄISCHE PATENTSCHRIFT

(45) Veröffentlichungstag und Bekanntmachung des Hinweises auf die Patenterteilung:
09.09.2015 Patentblatt 2015/37

(21) Anmeldenummer: 11736037.0

(22) Anmeldetag: 13.07.2011

(51) Int Cl.:
B60T 8/32 (2006.01)          B60T 8/40 (2006.01)
B60T 13/74 (2006.01)

(86) Internationale Anmeldenummer:
PCT/EP2011/061929

(87) Internationale Veröffentlichungsnummer:
WO 2012/010475 (26.01.2012 Gazette 2012/04)

(54) **VERFAHREN ZUR REGELUNG EINES ELEKTROHYDRAULISCHEN BREMSSYSTEMS SOWIE ELEKTROHYDRAULISCHES BREMSSYSTEM**

METHOD FOR CONTROLLING AN ELECTROHYDRAULIC BRAKING SYSTEM AND ELECTROHYDRAULIC BRAKING SYSTEM

PROCÉDÉ DE RÉGULATION D'UN SYSTÈME DE FREINAGE ÉLECTRO-HYDRAULIQUE, ET SYSTÈME DE FREINAGE ÉLECTRO-HYDRAULIQUE

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 10.06.2011 DE 102011077329
23.07.2010 DE 102010038325

(43) Veröffentlichungstag der Anmeldung:
29.05.2013 Patentblatt 2013/22

(73) Patentinhaber: Continental Teves AG & Co. oHG
60488 Frankfurt (DE)

(72) Erfinder:
• ROLL, Georg
60438 Frankfurt (DE)
• BÖHM, Jürgen
65558 Oberneisen (DE)
• JÄGER, Jens
65205 Wiesbaden (DE)

(56) Entgegenhaltungen:
WO-A1-97/13672          WO-A1-97/14593
DE-A1- 19 626 926

**Beschreibung**

Die Erfindung betrifft ein Verfahren zur Regelung eines elektrohydraulischen Bremssystems für Kraftfahrzeuge gemäß dem Oberbegriff von Anspruch 1 sowie ein elektrohydraulisches Bremssystem gemäß dem Oberbegriff von Anspruch 13.

In der Kraftfahrzeugtechnik finden "Brake-by-wire"-Bremsanlagen eine immer größere Verbreitung. Solche Bremsanlagen umfassen oftmals neben einem durch den Fahrzeugführer betätigbaren Hauptbremszylinder eine elektrisch steuerbare Druckbereitstellungseinrichtung, mittels welcher in der Betriebsart "Brake-by-wire" eine Betätigung der Radbremsen oder des Hauptbremszylinders stattfindet. Um dem Fahrzeugführer in der Betriebsart "Brake-by-wire" ein angenehmes Pedalgefühl zu vermitteln, umfassen die Bremsanlagen üblicherweise eine Bremspedalgefühl-Simulationseinrichtung. Bei diesen Bremsanlagen können die Radbremse auch ohne aktives Zutun des Fahrzeugführers aufgrund elektronischer Signale betätigt werden. Diese elektronischen Signale können beispielsweise von einem elektronischen Stabilitätsprogramm oder einem Abstandsregelsystem ausgegeben werden.

Aus der internationalen Patentanmeldung WO 2011/029812 A1, welche nach dem ersten und vor dem zweiten Prioritätsdatum der vorliegenden Anmeldung veröffentlicht wurde, ist eine "Brake-by-wire"-Bremsanlage bekannt mit einer Druckbereitstellungseinrichtung umfassend eine hydraulische Zylinder-Kolben-Anordnung, deren Kolben von einem Elektromotor unter Zwischenschaltung eines Rotations-Translations-Getriebes betätigbar ist. Die Druckbereitstellungseinrichtung ist hydraulisch mit einer Druckmodulationseinheit verbunden, die pro Radbremse ein Einlass- und ein Auslassventil aufweist. Die Bremsanlage weist einen Drucksensor zur Messung des Druckes (Bremssystemdruckes, Vordruckes) der Druckbereitstellungseinrichtung auf. In der Anmeldung werden keine näheren Ausführungen dazu gemacht, wie eine Einstellung oder eine Einregelung eines vorgegebenen Sollwertes für den Druck der Druckbereitstellungseinrichtung durchgeführt werden soll.

In der nach den Prioritäten dieser Anmeldung veröffentlichten DE 10 2011 076 675 wird ein Verfahren zur Regelung eines elektrohydraulischen Bremssystems mit einer elektrisch steuerbaren Druckbereitstellungseinrichtung, welche eine Zylinder-Kolben-Anordnung umfasst, deren Kolben durch einen elektromechanischen Aktuator betätigbar ist, beschrieben. Zur Einstellung eines geeigneten Drucks in der Zylinder-Kolben-Anordnung wird im Falle einer Antiblockierregelung der Druck stets um einen Sicherheitsaufschlag $\Delta P$ höher eingestellt als der gewünschte Radbremsdruck an der Radbremse mit dem höchsten Druckbedarf. Hierdurch wird erreicht, dass alle antiblockiergeregelten Räder ausreichend gesättigt werden, so dass ein Druckaufbau an jedem Rad durch ein Öffnen des zugehörigen Einlassventils durchgeführt werden kann. Um den Druck ein einem Rad konstant zu halten, wird das Einlassventil aktiv geschlossen, während das Auslassventil geschlossen bleibt. Bei einem Druckabbau wird das Einlassventil geschlossen, während durch kurzes Öffnen des Auslassventils Druckmittel aus der Radbremse abgelassen wird.

Die in der DE 10 2011 076 675 beschriebene Regelung hat den prinzipiellen Nachteil, dass der Druck in dem Druckraum des Kolben-Zylinder-Anordnung schwierig mit hoher Genauigkeit einzustellen ist, da in den weitaus längsten Zeiträumen der Regelung alle Einlassventile geschlossen sind und damit der Druckraum von den relativ elastischen Radbremsen abgetrennt sind. Um die Druckmodulation schnell und reproduzierbar zu gestalten, soll der Druckraum selbst über keine nennenswerte Elastizität verfügen. Aus regelungstechnischer Sicht stellt diese Randbedingung aber eine Schwierigkeit dar, da schon eine sehr geringe Modulation des Kolbenwegs dazu führt, dass der Druck in dem steifen Druckraum um nicht vernachlässigbare Beträge schwankt. Neben der regelungstechnischen Problematik führt die oben beschriebene Regelung auch zu gewissen Geräuschproblemen. Je höher die Druckdifferenz über den Einlassventilen ist, umso stärker sind die Schaltgeräusche, wenn ein Ventil auf Durchlass geschaltet wird. Durch das ständige Zu- und Abschalten von Radbremsen durch Öffnen und Schließen der Einlassventile wird die Regelung des Drucks in dem Druckraum also permanent gestört und es entstehen störende Geräusche.

In der WO 97/13672 A1 wird ein Bremsbetätigungssystem für Kraftfahrzeuge mit drei Kolben-Zylinder-Einheiten zur Betätigung der vier Radbremsen der Bremsesystems beschrieben, wobei an die dritte Kolben-Zylinder-Einheit die zwei Radbremsen der Hinterachse über je ein Einlassventil angeschlossen sind. Bezüglich der ABS-Druckregelung wird ausgeführt, dass eine schnelle Druckmodulation über die Einlass- und Auslassventile erfolgt, d.h. bei einem Druckhalten oder einem Druckabbau an den Radbremsen der Hinterachse sind die Radbremsen durch die geschlossenen Einlassventile von der dritten Zylinder-Kolben-Einheit abgetrennt. Es ergeben sich daher ebenfalls regelungstechnische Probleme sowie Geräuschprobleme.

Es ist daher Aufgabe der vorliegenden Erfindung, ein elektrohydraulisches Bremssystem mit einer elektrisch steuerbaren Druckbereitstellungseinrichtung, welche eine Zylinder-Kolben-Anordnung umfasst, deren Kolben durch einen elektromechanischen Aktuator betätigbar ist, und ein Verfahren zu dessen Regelung bereitzustellen, welches eine geräuscharme Antiblockierregelung erlaubt. Weiterhin soll eine hohe Regelungsgüte erreicht werden.

Diese Aufgabe wird erfindungsgemäß durch ein Verfahren gemäß Anspruch 1 und ein Bremssystem gemäß Anspruch 13 gelöst.

Der Erfindung liegt der Gedanke zugrunde, bei einer Antiblockierregelung der an die Druckbereitstellungseinrichtung angeschlossenen Radbremsen als Druck in dem hydraulischen Druckraum genau den Druck einzustellen, welchen die Radbremse mit dem höchsten einzustellenden Rad-Solldruck benötigt. Während der Antiblockierregelung ist stets zumindest eine Radbremse mit dem größten Rad-Solldruck im Sinne eines vollständigen Druckausgleichs zwischen Radbremse und Druckraum mit einem hydraulischen Druckraum der Zylinder-Kolben-Anordnung verbunden.

Bevorzugt entspricht während der Antiblockierregelung der Druck in dem hydraulischen Druckraum immer dem jeweils größten Rad-Solldruck der Radbremsen.

Während der Antiblockierregelung ist bevorzugt das Einlassventil einer einzigen Radbremse mit dem größten Rad-Solldruck geöffnet, so dass der Druck in dem hydraulischen Druckraum gleich dem Radbremsdruck dieser Radbremse ist.

In dem Fall, dass an zwei oder mehr Radbremsen derselbe größte Rad-Solldruck oder ungefähr der größte Rad-Solldruck eingestellt werden soll, sind während der Antiblockierregelung bevorzugt die Einlassventile aller dieser Radbremsen geöffnet.

Die Erfindung bietet den Vorteil, dass der Druckraum während der Antiblockierregelung mit zumindest einer relativ elastischen Radbremse verbunden ist. Hierdurch wird die Druckregelung regelungstechnisch vereinfacht. Außerdem wird ein Schalten des Einlassventils der mit dem Druckraum verbundenen Radbremse vermieden und die Schaltgeräusche der anderen Einlassventile aufgrund der niedrigeren Druckdifferenz über de Einlassventilen verringert.

Die Druckbereitstellungseinrichtung besteht im Wesentlichen aus einer hydraulischen Zylinder-Kolben-Anordnung sowie einem elektromechanischen Aktuator, der bevorzugt durch einen Elektromotor mit einem Untersetzungsgetriebe gebildet wird.

Der elektromechanische Aktuator ist bevorzugt reversierend ausgeführt und gewährleistet eine translatorische Bewegung eines hydraulischen Kolbens der Zylinder-Kolben-Anordnung, so dass in einem Druckraum der hydraulischen Zylinder-Kolben-Anordnung ein hydraulischer Druck auf- und abgebaut werden kann. Der Erfassung der Rotorlage und des Verfahrwegs des elektromechanischen Aktuators dient vorteilhafterweise ein Rotorlagensensor.

Bevorzugt werden Druckaufbauvorgänge und/oder Druckabbauvorgänge, welche an der Radbremse mit dem größten Rad-Solldruck oder an den Radbremsen mit dem größten oder fast größten Rad-Solldruck durchzuführen sind, ausschließlich mittels einer Verschiebung des Kolbens der Zylinder-Kolben-Anordnung durchgeführt, solange der Rad-Solldruck der Radbremse(n) der größten Rad-Solldruck ist. Hierdurch werden das Schalten der Einlass- und Auslassventile zur Druckmodulation und somit Schaltgeräusche vermieden.

Gemäß einer bevorzugten Ausführungsform des erfindungsgemäßen Verfahrens ist jede Radbremse, deren Rad-Solldruck nicht dem größten Rad-Solldruck entspricht, durch ein geschlossenes Einlassventil von dem hydraulischen Druckraum getrennt.

Es ist weiter bevorzugt, dass das Einlassventil der Radbremse, deren Rad-Solldruck nicht dem größten Rad-Solldruck entspricht, im Falle eines an der Radbremse durchzuführenden Druckaufbaus kurzzeitig geöffnet wird, und dass das Auslassventil der Radbremse, deren Rad-Solldruck nicht dem größten Rad-Solldruck entspricht, im Falle eines an der Radbremse durchzuführenden Druckabbaus geöffnet wird.

Der Rad-Solldruck für eine Radbremse ist bevorzugt gleich einer anhand der Antiblockierregelfunktion bestimmten ABS-Druckanforderung, wenn die ABS-Druckanforderung kleiner als ein von einem Fahrzeugführer angeforderter Bremsdruck ist. Andererseits ist der Rad-Solldruck für eine Radbremse bevorzugt gleich dem vom Fahrzeugführer angeforderten Bremsdruck, wenn der vom Fahrzeugführer angeforderte Bremsdruck kleiner als die ABS-Druckanforderung ist. Hierdurch wird der Rad-Solldruck auf den vom Fahrzeugführer angeforderten Bremsdruck begrenzt, z.B. wenn der Fahrer während der Antiblockierregelung vom Bremspedal geht.

Die anhand der Antiblockierregelfunktion bestimmte ABS-Druckanforderung ist vorteilhafterweise gleich einem vorgegebenen Maximaldruckwert, wenn sich das Rad nicht in einer Antiblockierregelung befindet oder die Antiblockierregelung an diesem Rad keine Priorität hat.

Gemäß einer Weiterbildung der Erfindung sind die Einlassventile als analogisierte oder analog arbeitende Einlassventile ausgeführt.

Bevorzugt wird ein Druckaufbau in einer Radbremse, deren Rad-Solldruck nicht dem größten Rad-Solldruck entspricht, durch eine digitale Ansteuerung des zugehörigen Einlassventils durchgeführt, wenn die Druckdifferenz zwischen dem Druck in dem hydraulischen Druckraum und dem aktuellen Radbremsdruck kleiner als ein vorgegebener Schwellenwert ist.

Ebenso ist es bevorzugt, dass der hydraulische Druckraum bzw. die hydraulischen Druckräume der Zylinder-Kolben-Anordnung über mindestens ein Ventil, vorteilhafterweise Rückschlagventil, mit dem Druckmittelvorratsbehälter verbunden ist, so dass durch ein Zurückziehen des Kolbens der Zylinder-Kolben-Anordnung Druckmittel aus dem Druckmittelvorratsbehälter in den Druckraum / die Druckräume nachgesaugt werden kann.

Vorteilhafterweise wird das erfindungsgemäße Verfahren in einem Bremssystem für Kraftfahrzeuge durchgeführt, das in einer sog. "Brake-by-wire"-Betriebsart sowohl vom Fahrzeugführer als auch unabhängig vom Fahrzeugführer ansteuerbar ist, vorzugsweise in der "Brake-by-wire"-Betriebsart betrieben wird und in mindestens einer Rückfallbetriebsart betrieben werden kann, in der nur der Betrieb durch den Fahrzeugführer möglich ist.

Gemäß der Erfindung sind während der Antiblockierregelung das Einlassventil der Radbremse(n) mit dem jeweils größten Solldruckwert andauernd geöffnet und das Auslassventil der Radbremse(n) mit dem jeweils größten Solldruckwert andauernd geschlossen, wobei vorteilhafterweise die Einlassventile als stromlos offene Ventile und die Auslassventile als stromlos geschlossene Ventile ausgeführt sind.

Weitere bevorzugte Ausführungsformen der Erfindung ergeben sich aus den Unteransprüchen und der nachfolgenden Beschreibung anhand von Figuren.

Es zeigen schematisch:

Fig. 1     ein Prinzipschaltbild eines elektrohydraulischen Bremssystems zur Durchführung eines erfindungsgemäßen Verfahrens, und

Fig. 2     zeitliche Verläufe verfahrensrelevanter Größen.

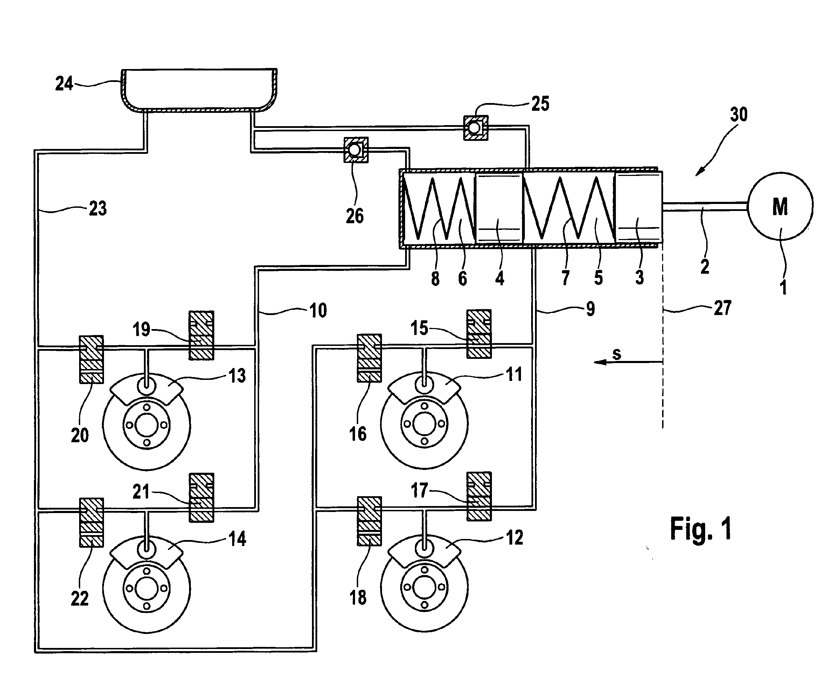

Fig. 1 zeigt das vereinfachte Prinzip eines aktiven elektrohydraulischen Bremssystems mit beispielsgemäß vier antiblockierregelbaren Radbremsen, welches zur Durchführung eines erfindungsgemäßen Verfahrens geeignet ist. Bei dem Bremssystem stellt der Fahrer, z.B. mittels eines Bremspedalwegs, eine Bremsdruckanforderung $P_{Request\_Driver}$, welche elektronisch mit Hilfe einer Druckbereitstellungseinrichtung 30 umgesetzt wird. Druckbereitstellungseinrichtung 30 umfasst beispielsgemäß einen Elektromotor 1, ein geeignetes Getriebe 2 und eine Zylinder-Kolben-Anordnung, welche einen Kolben 3, einen Schwimmkolben 4 und zwei hydraulische Druckräume 5 und 6 umfasst. Kolben 3 ist mittels des Elektromotors, welcher reversierend ausgeführt ist, in dem Zylinder verschiebbar. An jeden der beiden Druckräume 5, 6 sind zwei Radbremsen 11, 12, 13, 14 über jeweils ein elektrisch steuerbares, stromlos offenes Einlassventil 15, 17, 19, 21 angeschlossen. Jede Radbremse 11, 12, 13, 14 ist über ein elektrisch steuerbares, stromlos geschlossenes Auslassventil 16, 18, 20, 22 und Leitung 23 mit einem unter Atmosphärendruck stehenden Druckmittelvorratsbehälter 24 verbindbar.

Zur Umsetzung der Bremsdruckanforderung wird Kolben 3 um einen Weg s aus seiner Ruheposition 27 nach links verfahren, sodass ein bestimmtes Volumen des Druckmittels aus Druckraum 5 über Zuleitung 9 und den zunächst geöffneten Einlassventilen 15, 17 in die Radbremsen 11, 12 zweier Räder, z.B. Vorderräder, verschoben wird. Entsprechendes geschieht mit Hilfe des Schwimmkolbens 4, der über den Druck in Druckraum 5 ebenfalls nach links verschoben wird und damit Druckmittel aus dem Druckraum 6 über Leitung 10 und die ebenfalls zunächst geöffneten Einlassventile 19, 21 in die Radbremsen 13, 14 zweier weiterer Räder, z.B. Hinterräder, verschiebt. Damit wird in den Radbremsen 11, 12, 13 und 14 ein einheitlicher Bremsdruck entsprechend dem Fahrerwunsch $P_{Request\_Driver}$ erzeugt.

Die über den elektromechanischen Aktuator 1, 2 betätigbare Zylinder-Kolben-Anordnung 3, 4, 5, 6 umfasst beispielsgemäß Rückstellfedern 7, 8, mit denen die Kolben 3, 4 im ungebremsten Fall wieder in definierte Positionen zurückgeschoben werden. Die Rückstellfedern 7, 8 sind im Vergleich zu den üblicherweise aufgebrachten Drücken in den Druckräumen 5, 6 derart schwach ausgelegt, dass sie die Druckverhältnisse in den Druckräumen 5, 6 praktisch nicht beeinflussen.

Ein gleichzeitiger Bremsdruckabbau an allen Radbremsen 11, 12, 13 und 14 kann erfolgen, indem der Kolben 3 wieder in Richtung der Ruheposition 27 zurückgefahren wird. Ein schneller radindividueller Bremsdruckabbau an einer bestimmten Radbremse, wie er im Falle einer Antiblockierregelung (ABS-Regelung) an einem bestimmten Rad benötigt wird, ist auch über die der jeweiligen Radbremse 11, 12, 13 und 14 zugeordnete Kombination von Einlass- und Auslassventil (15, 16; 17, 18; 19, 20; 21, 22) möglich, indem das Einlassventil geschlossen und das Auslassventil für eine bestimmte Zeit geöffnet wird. Dann strömt Druckmittel aus der Radbremse durch das Auslassventil und somit über Leitung 23 in den Druckmittelvorratsbehälter 24. Dieses Vorgehen zum Druckabbau ist immer dann sinnvoll, wenn die Druckräume 5, 6 mehrere Radbremsen parallel mit individuellen (unterschiedlichen) Radbremsdrücken bedienen.

Die Druckräume 5, 6 der Zylinder-Kolben-Anordnung sind beispielsgemäß jeweils über eine hydraulische Verbindungsleitung mit einem Rückschlagventil 25, 26 mit dem Druckmittelvorratsbehälter 24 verbunden, so dass bei einem Zurückfahren des Kolbens 3 bei geschlossenen Einlassventilen Druckmittel aus dem Druckmittelvorratsbehälter 24 in die Druckräume 5, 6 nachgesaugt werden kann.

Gegenüber der vereinfachten Darstellung des Systems in Fig. 1 sind zahlreiche Verbesserungen und verschiedene Ausführungsvarianten des Prinzips denkbar, z.B. bei der Wahl der Ventile. Die Druckbereitstellungseinrichtung 30 kann auch eine Zylinder-Kolben-Anordnung mit nur einem hydraulischen Druckraum umfassen, dessen Kolben durch den elektromechanischen Aktuator verschiebbar ist, so dass alle Radbremsen an denselben hydraulischen Druckraum angeschlossen sind.

Das hier beschriebene Regelungskonzept beschreibt z.B. die Einstellung von geeigneten Druckverläufen in einem Druckraum 5, 6 einer Druckbereitstellungseinrichtung 30 eines aktiven Bremssystems im Falle einer laufenden Blockierschutzregelung (ABS-Regelung) aller Räder.

Beispielsgemäß wird als Druck in den Druckräumen 5 und 6 der Druckbereitstellungseinrichtung 30 immer genau der Druck eingestellt, welcher an der Radbremse mit der höchsten Druckanforderung eingestellt werden soll. Soll z.B. an Radbremse 11 der höchste Radbremsdruck eingestellt werden, so wird Radbremse 11 bezüglich der erforderlichen ABS-Druckmodulation direkt durch den Tauchkolben 3 bzw. 4 mit dem entsprechenden Druckverlauf bedient. Dabei bleibt das entsprechende Einlassventil 15 permanent geöffnet und der Druck in Radbremse 11 wird dadurch variiert, dass Kolben 3 in der Weise vor- und zurückgefahren wird, dass im Druckraum 5 genau der Druck eingestellt wird, welcher durch die Antiblockierregelfunktion für Radbremse 11 angefordert wird. An den anderen drei Radbremsen 12, 13, 14, für welche die Antiblockierregelfunktion kleinere Druckniveaus (Radbremsdrücke) anfordert, wird der entsprechende radindividuelle Radbremsdruck mit Hilfe der Einlassventile 17, 19, 21 sowie der zugeordneten Auslassventile 18, 20, 22 eingestellt.

Sollte zu einem bestimmten Zeitpunkt der gewünschte Radbremsdruck der zunächst direkt geregelten Radbremse 11 unter den gewünschten Radbremsdruck einer anderen Radbremse (beispielsweise unter das Niveau von Radbremse 12) fallen, so findet beispielsgemäß ein Wechsel des direkt geregelten Rades statt, indem nun die Radbremse 12 direkt durch die Druckraum 5 mit permanent offenem Einlassventil 17 bedient wird, während der Druck in Radbremse 11 über Takten (Öffnen und Schließen) des Einlassventils 15 eingestellt wird.

In den Druckräumen 5 und 6 befindet sich damit immer das Druckniveau der Radbremse mit dem höchsten Druckbedarf.

Ein Vorteil des oben beschriebenen Regelverfahrens besteht darin, dass einer der Druckräume 5, 6 zu jedem Zeitpunkt mit einer der Radbremsen 11, 12, 13 oder 14 direkt hydraulisch verbunden ist. Diese Verbindung mit einem "hydraulisch weichen Verbraucher" hat zur Folge, dass der Druck in den Druckräumen 5 und 6 über den Elektromotor 1 und das Getriebe 2 leicht einzustellen ist, da eine kleine Kolbenwegänderung $\Delta s$ auch nur eine kleine Druckänderung bewirkt. Damit wird einerseits die regelungstechnische Einstellung der Radbremsdrücke erleichtert, andererseits stellt sich ein wesentlich besseres Geräuschverhalten des Bremssystems ein, da die sonst starken Druckschwankungen in den Druckräumen 5 und 6 in Verbindung mit dem Zu- und Abschalten der Radbremskreise erhebliche Geräusche verursachen.

Betätigt der Fahrer das Bremspedal und fordert so einen Fahrerwunschdruck $P_{Request\_Driver}$ an, so wird der Druck $P_{Pre\_Pressure}$ in den Druckräumen 5, 6 auf das Maximum der Druckanforderungen $P_{Request\_i}$ aller n Radbremsen (i = 1, 2, .., n) eingestellt, wobei $P_{Request\_i}$ der Rad-Solldruck (an der Radbremse i gewünschter Radbremsdruck) für das i-te Rad ist:

$$P_{Pre\_Pressure} = Maximum(P_{Request\_1}, \dots, P_{Request\_n})$$

Der Rad-Solldruck $P_{Request\_i}$ für das i-te Rad ergibt sich aus dem Fahrerwunschdruck $P_{Request\_Driver}$ (angefordert über den Bremspedalweg) und der für die Radbremse i durch die Antiblockierregelfunktion bestimmten ABS-Druckanforderung $P_{ABS\_act\_i}$, gemäß

$$P_{Request\_i} = Minimum(P_{ABS\_act\_i}, P_{Request\_Driver}),$$

d.h. die Druckanforderung $P_{Request}$ entspricht dem kleineren Wert von Fahrerwunschdruck $P_{Request\_Driver}$ und ABS-Druckanforderung $P_{ABS\_act\_i}$, so dass der einzustellende Rad-Solldruck $P_{Request\_i}$ den Fahrerwunschdruck nicht übersteigen kann. Diese Begrenzung kann z.B. in der ABS-Regelroutine durchgeführt werden, so dass der Rad-Solldruck $P_{Request\_i}$ von der ABS-Regelfunktion ausgegeben wird. Befindet sich Radbremse i in der ABS-Regelung und hat die ABS-Regelung Vorrang gegenüber anderen Regelfunktionen (z.B. einem elektronischen Stabilitätsprogramm oder einem Abstandsregelsystem), so entspricht die ABS-Druckanforderung $P_{ABS\_act\_i}$ einem Bremsdruckverlauf mit Druckaufbau- und Druckabbauphasen um das Blockierdruckniveau des i-ten Rades. Wenn die Antiblockierregelung am i-ten Rad keine Regelungspriorität besitzt oder keine ABS-Regelung aktiv ist, so entspricht die ABS-Druckanforderung $P_{ABS\_act\_i}$ einem Maximaldruck $P_{Max}$ (z.B. 200bar).

Sollte der Fahrer während einer Bremsung einen höheren Bremsdruck $P_{Request\_Driver}$ anfordern, so wird dieser gemäß obiger Gleichungen nur dann zugelassen und als Druck $P_{Pre\_Pressure}$ wirksam, wenn mindestens eines der vier Räder noch ohne ABS-Regelung stabil läuft, also aufgrund des Fahrerbremsdrucks nicht zum Blockieren neigt.

Für ein noch nicht ABS-geregeltes Rad i wird die ABS-Druckanforderung $P_{ABS\_act\_i}$ auf einen maximalen Systemdruck von z.B. 200bar gesetzt, sodass dann der Fahrerbremsdruck $P_{Request\_Driver}$ über die Minimum-Funktion dominiert.

Wenn alle n Räder (z.B. für Pkw n=4) ABS-geregelt sind, wird der Druck $P_{Pre\_Pressure}$ über die Maximum-Funktion auf das Niveau der Radbremse mit der höchsten Druckanforderung abgesenkt, auch wenn dieses Niveau unter dem vom Fahrer angeforderten Bremsdruck $P_{Request\_Driver}$ liegt.

Alternativ, aber im Ergebnis gleich, kann der Druck $P_{Pre\_Pressure}$ in den Druckräumen 5, 6 auch gemäß der Formel

$$P_{Pre\_Pressure} = Minimum(Maximum(P_{ABS\_act\_1}, \ldots , P_{ABS\_act\_n}), P_{Request\_Driver})$$

berechnet werden.

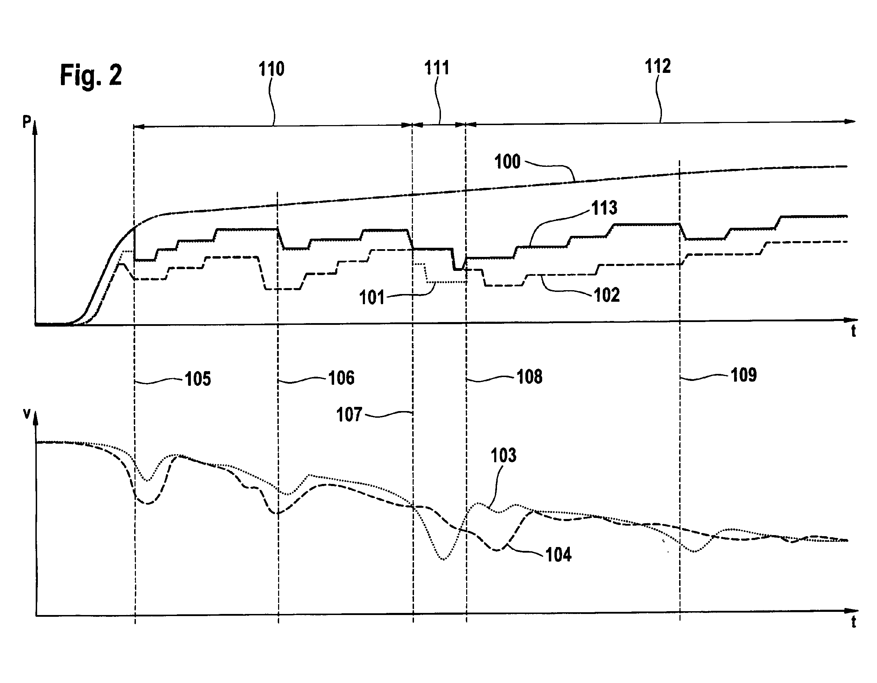

Fig. 2 zeigt zeitliche Verläufe verfahrensrelevanter Größen während einer ABS-Regelung. Anhand der beispielhaften Zeitdiagramme werden Ausführungsbeispiele eines erfindungsgemäßen Verfahrens erläutert. Um die Abläufe möglichst übersichtlich darzustellen, werden beispielsgemäß nur zwei ABSgeregelte Räder betrachtet. Die erläuterten Prinzipien lassen sich jedoch auf beliebig viele an das System angeschlossene Räder oder Radbremskreise übertragen, z.B. auch auf vier Räder eines Kraftwagens.

In Fig. 2 ist im oberen Diagramm die vom Fahrer angeforderte Bremsdruckanforderung $P_{Request\_Driver}$ als zeitlicher Verlauf 100 dargestellt. In dem Beispiel hat der Fahrer mit seiner Bremsdruckanforderung 100 die beiden betrachteten Räder überbremst, was an den Radgeschwindigkeiten 103 (z.B. linkes Vorderrad, i=1, z.B. Radbremse 11 in Fig. 1) und 104 (z.B. rechtes Vorderrad, i=2, z.B. Radbremse 12 in Fig. 1) in dem unteren Diagramm aufgrund starker Bremsschlupf-Einläufe ersichtlich ist. Die Antiblockierregelfunktion stellt daraufhin die reduzierten Radbremsdrücke 101 (linkes Vorderrad, $P_{Request\_1}$) und 102 (rechtes Vorderrad, $P_{Request\_2}$) ein. Zum Zeitpunkt 105 befinden sich erstmalig alle Räder in der ABS-Regelung, sodass der Druck 113 ($P_{Pre\_Pressure}$) in den Druckräumen 5, 6, der bis zum Zeitpunkt 105 dem Fahrer-Bremswunsch 100 folgte, auf das Rad mit der höchsten ABS-Druckanforderung (dem höchsten Rad-Solldruck $P_{Request\_i}$), also auf das Signal 101, herabgesetzt wird. Aus Gründen der Übersichtlichkeit ist das Druckverlauf 113 etwas nach oben versetzt zu den Radbremsdruck-Signalen 101 und 102 gezeichnet, damit diese nicht verdeckt werden.

Im Zeitintervall 110 liegt der Radbremsdruck 101 des linken Vorderrades stets über dem Radbremsdruck 102 des rechten Vorderrades, sodass in dieser Zeit das linke Rad das "führende Rad" bezüglich der Druckeinstellung in dem Druckraum 5, 6 ist. Das bedeutet, dass der Druck 113 exakt auf diesen Druckwert eingestellt wird. Mittels elektromechanischem Aktuator 30 und Tauchkolben 3 wird Druck 113 genau so moduliert, dass das linke Vorderrad (Radbremse 11 in Fig. 1) ohne Aktivierung seiner Einlass- und Auslassventile 15, 16 mit dem entsprechenden Bremsdruck $P_{Request\_1}$ beaufschlagt wird.

Zum Zeitpunkt 106 wird der erforderliche Druckabbau in Radbremse 11 (Verlauf 101) ebenfalls direkt durch den Tauchkolben 3 realisiert, indem dieser um einen kleinen Wegbetrag $\Delta s$ zurück (nach rechts in Fig. 1) gefahren wird.

An der rechten Vorderradbremse 12 wird der Radbremsdruckverlauf 102 eingestellt, indem die Radbremse durch Schließen des zugehörigen Einlassventils 17 weitgehend von Druckraum 5 abgetrennt und nur in den kurzen Druckaufbauphasen jeweils durch Öffnen des Einlassventils 17 mit etwas Druckmittel versorgt wird. Bei einem erforderlichen Druckabbau im Bremskreis 12 wird das Einlassventil 17 geschlossen und das Auslassventil 18 kurzzeitig geöffnet, sodass etwas Druckmittel aus dem Radbremskreis 12 in den Vorratsbehälter 24 entweichen kann. Das Rad mit der kleineren Druckanforderung wird also über das zugeordnete Ventilpaar geregelt.

Wie Fig. 2 zeigt, liegt der so eingestellte Druck 113 in den Druckräumen 5, 6 deutlich unter der Fahrerdruckanforderung 100, was zu einem verringerten Energiebedarf und einer geringerer Geräuschentwicklung führt.

Aufgrund der relativ kleinen Druckdifferenz zwischen dem Druck 113 und dem Radbremsdruck 102 ist es vorteilhaft, im Falle eines notwendigen Druckaufbaus in Radbremse 12 das Einlassventil 17 gegebenenfalls digital anzusteuern, um ein sicheres kurzzeitiges Öffnen des Ventils und einen ausreichenden Volumendurchstrom zu gewährleisten, auch wenn es sich bei Ventil 17 um ein Analogventil oder ein analogisiertes Schaltventil handelt, welches zum Erreichen eines kleinen Durchflusses üblicherweise über einen längeren Zeitraum mit einem analogen (mittleren) Stromwert versorgt wird.

Ein analoger Betrieb des Einlassventils ist beispielsgemäß nur dann sinnvoll, wenn die Druckdifferenz zwischen dem Druck 113 und dem Raddruck 102 größer als eine gewisse Schwelle, beispielsweise 40 bar, ist. In diesem Fall kann der analoge Betrieb aus geräuschtechnischen Gründen vorteilhaft sein.

Um den gewünschten Druckverlauf 102 möglichst genau einzustellen, kann auch ein gemischter Digital- und Analogbetrieb des Einlassventils 17 vorteilhaft sein, wobei das Ventil durch kurze Digitalansteuerung komplett geöffnet und dann im analogen Modus in der Folgezeit wieder teilweise geschlossen wird.

Zum Zeitpunkt 107 tritt ein Wechsel in der "Radführung" bezüglich der Druckeinstellung auf, da das linke Vorderrad nun aufgrund eines starken Schlupfeinlaufs (siehe Geschwindigkeit 103) einen starken Druckabbau benötigt, der den Radbremsdruck 101 unter das Radbremsdruck-Niveau 102 des rechten Vorderrades sinken lässt. Erst zum Zeitpunkt 108 übersteigt Druck 101 wieder Druck 102, sodass im Zeitintervall 111 das rechte Vorderrad mit dem höheren Druckniveau 102 führend ist, also den Druck 113 bestimmt.

Ein solcher Wechsel des führenden Rades bewirkt eine Umschaltung des Druckraums 5 von einer Radbremse zu einer anderen, was aufgrund der schnellen Umschaltung der Einlassventile (im Zeitpunkt 108 wird das Einlassventil 15 geschlossen und das Einlassventil 17 vollständig geöffnet) zu einem Drucksprung in dem Druckraum 5 führt. Wegen der Steifigkeit des Druckraums 5 geschieht der Druckangleich an das "neue" Rad sehr schnell, da ein geringer Ausgleichs-Volumenstrom des zugeschalteten Rades (mit seinem "weichen" Radbremskreis) zu einer sofortigen Druckänderung in Druckraum 5 führt.

Aufgrund der schnellen Druckanpassung in den Druckräumen 5, 6 an die jeweils zugeschaltete Radbremse führt auch ein häufiges und schnelles Umschalten des führenden Rades nicht zu einem Bremsleistungsverlust.

Der Druckabbau zum Zeitpunkt 107 in Radbremse 11 wird beispielsgemäß mit dem Auslassventil 16 durchgeführt (und nicht durch Zurückfahren des Tauchkolbens 3), da der Druckraum 5 unmittelbar zum Zeitpunkt 107 mit dem "neuen" Radkreis 12 verbunden wird.

Demgegenüber geschieht der Druckabbau in Radbremse 11 zum Zeitpunkt 109 beispielsgemäß wieder mit dem Tauchkolben 3, da die Radbremse 11 im gesamten Zeitintervall 112 führend ist, da ihr Druckniveau (Verlauf 101) stets über dem Druck 102 des Kreises 12 bleibt.

Gemäß einem anderen Ausführungsbeispiel des erfindungsgemäßen Verfahrens werden in einem bestimmten Zeitintervall zwei oder sogar mehr Räder gleichzeitig mit den Druckräumen 5, 6 verbunden, wenn diese Räder alle dieselbe oder annähernd dieselbe Druckanforderung $P_{Request\_i}$ besitzen. Dies kann insbesondere bei den beiden Hinterrädern eines Kraftwagens auftreten, da diese meist nach dem sogenannten Select-Low-Prinzip geregelt werden, d.h. beide Hinterräder sollen genau denselben Rad-Solldruck bekommen, den das Hinterrad mit der jeweils stärkeren Blockierneigung benötigt.

Beispielsgemäß wird das Verfahren zur Regelung eines aktiven hydraulischen Bremssystems herangezogen, welches eine Druckbereitstellungseinrichtung mit einem elektromotorisch angetriebenen Kolben, der in einem Druckraum eines Zylinders einen zentralen Druck für Radbremsen eines Kraftfahrzeugs erzeugt, ein Einlassventil für jede Radbremse, mit dem die Radbremse von dem Druckraum hydraulisch abgetrennt werden kann, ein Auslassventil für jede Radbremse, mit dem zwecks Druckabbau Druckmittel aus der Radbremse in einen Druckmittelvorratsbehälter abgelassen werden kann, und eine ventilgesteuerte hydraulische Verbindungsleitung zwischen dem Druckmittelvorratsbehälter und dem Zylinder des Kolbens umfasst.

Im Falle einer ABS-Regelung an allen Radbremsen wird z.B. der Druck in der Druckbereitstellungseinrichtung entsprechend dem Druckverlauf eingestellt, den die Radbremse mit der höchsten Druckanforderung benötigt (führende Radbremse), wobei Einlassventil und Auslassventil dieser Radbremse in einem geöffneten bzw. einem geschlossenen Zustand (vorteilhafterweise dem unbestromten Zustand / Neutralzustand) gehalten werden, sodass sich in der Radbremse der Druck des Druckraums der Druckbereitstellungseinrichtung einstellt.

Vorteilhafterweise werden in dem jeweils offenen Radbremskreis (der führenden Radbremse) alle seitens der Antiblockierregelung geforderten Druckauf- und Druckabbauvorgänge ausschließlich durch ein Verfahren des Kolbens, also durch Variation des Drucks in der Druckbereitstellungseinrichtung, durchgeführt. Dies gilt, solange der Druck des offenen Radbremskreises auch im Falle eines Druckabbaus über den aktuellen Druckniveaus aller anderen ABS-geregelten Räder bleibt.

Gemäß einem anderen Ausführungsbeispiel werden auch mehrere Radbremskreise gleichzeitig mit dem Druckraum verbunden, wenn diese gleiche oder fast gleiche Druckanforderungen haben. Dies tritt vorteilhafter im Falle einer Select-Low-Regelung der Hinterräder eines Kraftwagens auf.

Beispielsgemäß werden alle Räder / Radbremsen mit einem geringeren Druckniveau als das direkt mit dem Druck der Druckbereitstellungseinrichtung geregelte Rad (nichtführende Radbremsen) mit Hilfe des ihnen zugeordneten Einlassventils vom Druckraum hydraulisch abgetrennt und nur zeitweise durch Öffnen des Einlassventils mit dem Druckraum verbunden, wenn jeweils ein Druckaufbau erforderlich ist. Ein erforderlicher Druckabbau an einer nicht-führenden Radbremse wird mit Hilfe des der Radbremse zugeordneten Auslassventils durchgeführt.

Ein Druckaufbau an einer nicht-führenden Radbremse wird vorteilhafterweise auch im Falle von analogisierten oder analog arbeitenden Einlassventilen zeitweise oder immer durch digitale Ansteuerung des Einlassventils durchgeführt, insbesondere wenn die Druckdifferenz zwischen Druckraum und Radbremse gering ist, also unter einer definierten Schwelle liegt.

**Patentansprüche**

1. Verfahren zur Regelung eines elektrohydraulischen Bremssystems für Kraftfahrzeuge mit einer Antiblockierregelfunktion (ABS) und einer elektrisch steuerbaren Druckbereitstellungseinrichtung (30), welche eine Zylinder-Kolben-Anordnung mit zumindest einem hydraulischen Druckraum (5, 6) umfasst, deren Kolben (3, 4) durch einen elektromechanischen Aktuator (1, 2) verschiebbar ist, so dass ein vorbestimmter Druck ($P_{Pre\_Pressure}$) in dem hydraulischen Druckraum (5, 6) einstellbar ist, und mit einer Anzahl (n) hydraulisch betätigbarer Radbremsen (11, 12, 13, 14), welche jeweils über ein elektrisch betätigbares Einlassventil (15, 17, 19, 21) mit einem hydraulischen Druckraum (5, 6) der Zylinder-Kolben-Anordnung und jeweils über ein elektrisch betätigbares Auslassventil (16, 18, 20, 22) mit einem Druckmittelvorratsbehälter (24) verbunden oder verbindbar sind, **dadurch gekennzeichnet, dass** bei einer Antiblockierregelung an allen Radbremsen die Zylinder-Kolben-Anordnung zur Einstellung eines radindividuellen Rad-Solldrucks ($P_{Request\_i}$) an jeder Radbremse (11, 12, 13, 14) derart angesteuert wird, dass der Druck ($P_{Pre\_Pressure}$) in dem hydraulischen Druckraum (5, 6) auf den größten Rad-Solldruck ($P_{Request\_i}$) eingestellt wird, wobei während der Antiblockierregelung immer zumindest eine Radbremse mit dem größten Rad-Solldruck im Sinne eines vollständigen Druckausgleichs zwischen Radbremse und Druckraum (5, 6) mit einem hydraulischen Druckraum (5, 6) der Zylinder-Kolben-Anordnung verbunden ist.

2. Verfahren nach Anspruch 1, **dadurch gekennzeichnet, dass** während der Antiblockierregelung der Druck ($P_{Pre\_Pressure}$) in dem hydraulischen Druckraum (5, 6) immer dem jeweils größten Rad-Solldruck der Radbremsen entspricht.

3. Verfahren nach einem der Ansprüche 1 bis 2, **dadurch gekennzeichnet, dass** während der Antiblockierregelung das Einlassventil einer einzigen Radbremse mit dem größten Rad-Solldruck geöffnet ist.

4. Verfahren nach einem der Ansprüche 1 bis 2, **dadurch gekennzeichnet, dass** während der Antiblockierregelung die Einlassventile aller jener Radbremsen geöffnet sind, deren Rad-Solldrücke dem größten Rad-Solldruck oder ungefähr dem größten Rad-Solldruck entsprechen.

5. Verfahren nach einem der vorhergehenden Ansprüche, **dadurch gekennzeichnet, dass** Druckaufbauvorgänge und/oder Druckabbauvorgänge, welche an der Radbremse (11, 12, 13, 14) mit dem größten Rad-Solldruck oder an den Radbremsen mit dem größten oder fast größten Rad-Solldruck durchzuführen sind, ausschließlich mittels einer Verschiebung (s) des Kolbens (3, 4) der Zylinder-Kolben-Anordnung durchgeführt werden, solange der Rad-Solldruck der Radbremse(n) der größten Rad-Solldruck ist.

6. Verfahren nach einem der vorhergehenden Ansprüche, **dadurch gekennzeichnet, dass** jede Radbremse, deren Rad-Solldruck nicht dem größten Rad-Solldruck entspricht, durch ein geschlossenes Einlassventil von dem hydraulischen Druckraum (5, 6) getrennt ist.

7. Verfahren nach Anspruch 6, **dadurch gekennzeichnet, dass** das Einlassventil der Radbremse, deren Rad-Solldruck nicht dem größten Rad-Solldruck entspricht, im Falle eines an der Radbremse durchzuführenden Druckaufbaus kurzzeitig geöffnet wird, und dass das Auslassventil der Radbremse, deren Rad-Solldruck nicht dem größten Rad-Solldruck entspricht, im Falle eines an der Radbremse durchzuführenden Druckabbaus geöffnet wird.

8. Verfahren nach einem der vorhergehenden Ansprüche, **dadurch gekennzeichnet, dass** der Rad-Solldruck ($P_{Request\_i}$) für eine Radbremse (i) gleich einer anhand der Antiblockierregelfunktion bestimmten ABS-Druckanforderung ($P_{ABS\_act\_i}$) ist, wenn die ABS-Druckanforderung ($P_{ABS\_act\_i}$) kleiner als ein von einem Fahrzeugführer angeforderter Bremsdruck ($P_{Request\_Driver}$) ist.

9. Verfahren nach Anspruch 8, **dadurch gekennzeichnet, dass** der Rad-Solldruck ($P_{Request\_i}$) für eine Radbremse (i) gleich dem vom Fahrzeugführer angeforderten Bremsdruck ($P_{Request\_Driver}$) ist, wenn der vom Fahrzeugführer angeforderte Bremsdruck ($P_{Request\_Driver}$) kleiner als die ABS-Druckanforderung ($P_{ABS\_act\_i}$) ist.

10. Verfahren nach Anspruch 8 oder 9, **dadurch gekennzeichnet, dass** die anhand der Antiblockierregelfunktion bestimmte ABS-Druckanforderung ($P_{ABS\_act\_i}$) gleich einem vorgegebenen Maximaldruckwert ($P_{Max}$) ist, wenn sich das Rad (i) nicht in einer Antiblockierregelung befindet oder die Antiblockierregelung an diesem Rad (i) keine Priorität hat.

11. Verfahren nach mindestens einem der vorhergehenden Ansprüche, **dadurch gekennzeichnet, dass** die Einlassventile als analogisierte oder analog arbeitende Einlassventile ausgeführt sind.

12. Verfahren nach Anspruch 11, **dadurch gekennzeichnet, dass** ein Druckaufbau in einer Radbremse, deren Rad-Solldruck nicht dem größten Rad-Solldruck entspricht, durch eine digitale Ansteuerung des zugehörigen Einlassventils durchgeführt wird, wenn die Druckdifferenz zwischen dem Druck ($P_{Pre\_Pressure}$) in dem hydraulischen Druckraum und dem aktuellen Radbremsdruck kleiner als ein vorgegebener Schwellenwert ist.

13. Elektrohydraulisches Bremssystem für Kraftfahrzeuge mit zumindest einer Antiblockierregelfunktion, mit einer mittels einer elektronischen Steuer- und Regeleinheit ansteuerbaren Druckbereitstellungseinrichtung (30), welche eine Zylinder-Kolben-Anordnung mit zumindest einem hydraulischen Druckraum (5, 6) umfasst, deren Kolben (3, 4) durch einen elektromechanischen Aktuator (1, 2) betätigbar ist, so dass ein vorbestimmter Druck ($P_{Pre\_Pressure}$) in dem hydraulischen Druckraum (5, 6) einstellbar ist, und mit hydraulisch betätigbaren Radbremsen (11, 12, 13, 14), welche jeweils über ein elektrisch betätigbares Einlassventil (15, 17, 19, 21) mit einem hydraulischen Druckraum (5, 6) der Zylinder-Kolben-Anordnung und jeweils über ein elektrisch betätigbares Auslassventil (16, 18, 20, 22) mit einem Druckmittelvorratsbehälter (24) verbunden oder verbindbar sind, wobei die elektronische Steuer- und Regeleinheit Mittel zur Durchführung eines Verfahrens nach einem der Ansprüche 1 bis 12 umfasst, **dadurch gekennzeichnet, dass** in der elektronischen Steuer- und Regeleinheit ein Verfahren gemäß einem der Ansprüche 1 bis 12 durchgeführt wird.

## Claims

1.  Method for controlling an electrohydraulic braking system for motor vehicles having an antilock braking control function (ABS) and an electrically controllable pressure generating device (30) that comprises a cylinder-piston arrangement having at least one hydraulic pressure chamber (5, 6), the piston (3, 4) of which can be being displaced by means of an electromechanical actuator (1, 2), so that a predetermined pressure ($P_{Pre\_Pressure}$) can be set in the hydraulic pressure chamber (5, 6), and having a number (n) of hydraulically actuatable wheel brakes (11, 12, 13, 14), which are connected or can be connected in each case by means of an electrically actuatable inlet valve (15, 17, 19, 21) to a hydraulic pressure chamber (5, 6) of the cylinder-piston arrangement and in each case by means of an electrically actuatable outlet valve (16, 18, 20, 22) to a pressure medium storage container (24), **characterized in that** in the case of all the wheels being subjected to an antilock braking control operation the cylinder-piston arrangement is controlled for setting an individual wheel desired pressure ($P_{Request\_i}$) for each wheel at each wheel brake (11, 12, 13, 14) in such a manner that the pressure ($P_{Pre\_Pressure}$) in the hydraulic pressure chamber (5, 6) is set to the highest wheel desired pressure ($P_{Request\_i}$), during the antilock braking control operation always at least one wheel brake having the highest wheel desired pressure in terms of a full pressure compensation between the wheel brake and the pressure chamber (5, 6) is connected to a hydraulic pressure chamber (5, 6) of the cylinder-piston arrangement.

2.  Method according to Claim 1, **characterized in that** during the antilock braking control operation the pressure ($P_{Pre\_Pressure}$) in the hydraulic pressure chamber (5, 6) always corresponds to the respective highest wheel desired pressure of the wheel brakes.

3.  Method according to either of Claims 1 and 2, **characterized in that** during the antilock braking control operation the inlet valve of a single wheel brake having the highest wheel desired pressure is open.

4.  Method according to either of Claims 1 and 2, **characterized in that** during the antilock braking control operation the inlet valves of all those wheel brakes are open where the wheel desired pressures of said wheel brakes correspond to the highest wheel desired pressure or correspond approximately to the highest wheel desired pressure.

5.  Method according to any one of the preceding claims, **characterized in that** the pressure increase procedures and/or the pressure reduction procedures that are to be performed at the wheel brake (11, 12, 13, 14) having the highest wheel desired pressure or at the wheel brakes having the highest or almost highest wheel desired pressure are performed exclusively by means of displacing (s) the piston (3, 4) of the cylinder-piston arrangement as long as the wheel desired pressure of the wheel brake(s) is the highest wheel desired pressure.

6.  Method according to any one of the preceding claims, **characterized in that** each wheel brake whose wheel desired pressure does not correspond to the highest wheel desired pressure is separated by a closed inlet valve from the hydraulic pressure chamber (5, 6).

7.  Method according to Claim 6, **characterized in that** the inlet valve of the wheel brake whose wheel desired pressure does not correspond to the highest wheel desired pressure is opened for a short period of time in the case that a pressure increase procedure is to be performed at the wheel brake and that the outlet valve of the wheel brake whose wheel desired pressure does not correspond to the highest wheel desired pressure is opened in the case that a pressure reduction procedure is to be performed at the wheel brake.

8.  Method according to any one of the preceding claims, **characterized in that** the wheel desired pressure ($P_{Request\_i}$) for a wheel brake (i) is equal to an ABS pressure request ($P_{ABS\_act\_i}$) that is determined by means of the antilock braking control function if the ABS pressure request ($P_{ABS\_act\_i}$) is smaller than a braking pressure that is requested by a vehicle driver ($P_{Pequest\_Driver}$).

9. Method according to Claim 8, **characterized in that** the wheel desired pressure ($P_{Request\_i}$) for a wheel brake (i) is equal to the braking pressure that is requested by the vehicle driver ($P_{Request\_Driver}$) if the braking pressure requested by the vehicle driver ($P_{Request\_Driver}$) is smaller than the ABS pressure request ($P_{ABS\_act\_i}$).

10. Method according to Claim 8 or 9, **characterized in that** the ABS pressure request ($P_{ABS\_act\_i}$) that is determined by means of the antilock braking control function is equal to a predetermined maximum pressure value ($P_{Max}$) if the wheel (i) is not undergoing an antilock control operation or if the antilock braking control operation at this wheel (i) does not have priority.

11. Method according to at least one of the preceding claims, **characterized in that** the inlet valves are embodied as analogue inlet valves or as inlet valves that operate in an analogue manner.

12. Method according to Claim 11, **characterized in that** a pressure increase procedure is performed in a wheel brake whose wheel desired pressure does not correspond to the highest wheel desired pressure by means of digitally controlling the associated inlet valves if the pressure differential between the pressure ($P_{Pre\_Pressure}$) in the hydraulic pressure chamber and the current wheel braking pressure is smaller than a predetermined threshold value.

13. Electrohydraulic braking system for motor vehicles having at least one antilock braking control function, having a pressure generating device (30) that can be controlled by means of an electronic control unit, which pressure generating device comprises a cylinder-piston arrangement having at least one hydraulic pressure chamber (5, 6), the piston (3, 4) of which can be actuated by means of an electromechanical actuator (1, 2), so that a predetermined pressure ($P_{Pre\_Pressure}$) can be set in the hydraulic pressure chamber (5, 6), and having hydraulically actuatable wheel brakes (11, 12, 13, 14) that are connected or can be connected in each case by means of an electrically actuatable inlet valve (15, 17, 19, 21) to a hydraulic pressure chamber (5, 6) of the cylinder-piston arrangement and that are connected or can be connected in each case by means of an electrically actuatable outlet valve (16, 18, 20, 22) to a pressure medium storage container (24), wherein the electronic control unit comprises means for performing a method according to any one of Claims 1 to 12, **characterized in that** a method according to any one of Claims 1 to 12 is performed in the electronic control unit.

**Revendications**

1. Procédé de régulation d'un système de freinage électrohydraulique pour des véhicules automobiles avec une fonction de régulation d'antiblocage (ABS) et avec un dispositif de production de pression à commande électrique (30), qui comprend un ensemble cylindre-piston avec au moins une chambre de pression hydraulique (5, 6), dont le piston (3, 4) est déplaçable par un actionneur électromécanique (1, 2), de telle manière qu'une pression prédéterminée ($P_{Pre\_Pressure}$) puisse être réglée dans la chambre de pression hydraulique (5, 6), et avec un nombre (n) de freins de roue à commande hydraulique (11, 12, 13, 14), qui sont ou peuvent être raccordés respectivement par une soupape d'admission (15, 17, 19, 21) à une chambre de pression hydraulique (5, 6) de l'ensemble cylindre-piston et respectivement par une soupape d'échappement à commande électrique (16, 18, 20, 22) à un réservoir de stockage de fluide sous pression (24), **caractérisé en ce que**, avec une régulation d'antiblocage à tous les freins de roue, l'ensemble cylindre-piston est commandé, pour le réglage d'une pression de consigne de roue individuelle ($P_{Request\_i}$) à chaque frein de roue (11, 12, 13, 14), de telle manière que la pression ($P_{Pre\_Pressure}$) dans la chambre de pression hydraulique (5, 6) soit réglée à la plus haute pression de consigne de roue ($P_{Request\_i}$), dans lequel, pendant la régulation d'antiblocage, toujours au moins un frein de roue est raccordé à la plus haute pression de consigne de roue, au sens d'un équilibrage de pression total entre le frein de roue et la chambre de pression (5, 6) avec une chambre de pression hydraulique (5, 6) de l'ensemble cylindre-piston.

2. Procédé selon la revendication 1, **caractérisé en ce que** pendant la régulation d'antiblocage, la pression ($P_{Pre\_Pressure}$) dans la chambre de pression hydraulique (5, 6) correspond toujours à la pression de consigne de roue respectivement la plus haute des freins de roue.

3. Procédé selon l'une quelconque des revendications 1 à 2, **caractérisé en ce que** pendant la régulation d'antiblocage, la soupape d'admission d'un seul frein de roue avec la pression de consigne de roue la plus haute est ouverte.

**4.** Procédé selon l'une quelconque des revendications 1 à 2, **caractérisé en ce que** les soupapes d'échappement de tous ceux des freins de roue sont ouvertes, pour lesquels les pressions de consigne de roue correspondent à la pression de consigne de roue la plus haute ou environ à la pression de consigne de roue la plus haute.

**5.** Procédé selon l'une quelconque des revendications précédentes, **caractérisé en ce que** l'on effectue des opérations de hausse de pression et/ou des opérations de baisse de pression, qui doivent être effectuées au frein de roue (11, 12, 13, 14) avec la pression de consigne de roue la plus haute ou aux freins de roue avec la pression de consigne de roue la plus haute ou presque la plus haute, exclusivement au moyen d'un déplacement (s) du piston (3, 4) de l'ensemble cylindre-piston, aussi longtemps que la pression de consigne de roue du/des frein(s) de roue est la pression de consigne de roue la plus haute.

**6.** Procédé selon l'une quelconque des revendications précédentes, **caractérisé en ce que** chaque frein de roue, dont la pression de consigne de roue ne correspond pas à la pression de consigne de roue la plus haute, est séparé de la chambre de pression hydraulique (5, 6) par une soupape d'admission fermée.

**7.** Procédé selon la revendication 6, **caractérisé en ce que** la soupape d'admission du frein de roue, dont la pression de consigne de roue ne correspond pas à la pression de consigne de roue la plus haute, est ouverte brièvement dans le cas d'une hausse de pression à effectuer au frein de roue, et **en ce que** la soupape d'échappement du frein de roue, dont la pression de consigne de roue ne correspond pas à la pression de consigne de roue la plus haute, est ouverte dans le cas d'une baisse de pression à effectuer au frein de roue.

**8.** Procédé selon l'une quelconque des revendications précédentes, **caractérisé en ce que** la pression de consigne de roue ($P_{Request\_i}$) pour un frein de roue (i) est égale à une demande de pression ABS ($P_{ABS\_act\_i}$) déterminée à l'aide de la fonction de régulation d'antiblocage, lorsque la demande de pression ABS ($P_{ABS\_act\_i}$) est inférieure à une pression de frein ($P_{Request\_Driver}$) demandée par un conducteur du véhicule.

**9.** Procédé selon la revendication 8, **caractérisé en ce que** la pression de consigne de roue ($P_{Request\_i}$) pour un frein de roue (i) est égale à la pression de frein ($P_{Request\_Driver}$) demandée par le conducteur du véhicule, lorsque la pression de frein ($P_{Request\_Driver}$) demandée par le conducteur du véhicule est inférieure à la demande de pression ABS ($P_{ABS\_act\_i}$).

**10.** Procédé selon la revendication 8 ou 9, **caractérisé en ce que** la demande de pression ABS ($P_{ABS\_act\_i}$) déterminée à l'aide de la fonction de régulation d'antiblocage est égale à une valeur de pression maximale prédéterminée ($P_{Max}$), lorsque la roue (i) ne se trouve pas dans une régulation d'antiblocage ou que la régulation d'antiblocage à cette roue (i) n'a pas de priorité.

**11.** Procédé selon au moins une des revendications précédentes, **caractérisé en ce que** les soupapes d'admission sont configurées en soupapes d'admission rendues analogiques ou opérant de façon analogique.

**12.** Procédé selon la revendication 11, **caractérisé en ce que** l'on effectue une hausse de pression dans un frein de roue, dont la pression de consigne de roue ne correspond pas à la pression de consigne de roue la plus haute, par une commande numérique de la soupape d'admission correspondante, lorsque la différence de pression entre la pression ($P_{Pre\_Pressure}$) dans la chambre de pression hydraulique et la pression de frein de roue actuelle est inférieure à une valeur de seuil prédéterminée.

**13.** Système de freinage électrohydraulique pour des véhicules automobiles avec au moins une fonction de régulation d'antiblocage, avec un dispositif de production de pression (30) à commander au moyen d'une unité électronique de commande et de régulation, lequel comprend un ensemble cylindre-piston avec au moins une chambre de pression hydraulique (5, 6), dont le piston (3, 4) peut être actionné par un actionneur électromécanique (1, 2), de telle manière qu'une pression prédéterminée ($P_{Pre\_Pressure}$) puisse être réglée dans la chambre de pression hydraulique (5, 6), et avec des freins de roue (11, 12, 13, 14) à commande hydraulique, qui sont ou qui peuvent être raccordés respectivement par une soupape d'admission (15, 17, 19, 21) à commande électrique à une chambre de pression hydraulique (5, 6) de l'ensemble cylindre-piston et respectivement par une soupape d'échappement (16, 18, 20, 22) à commande électrique à un réservoir de stockage de fluide sous pression (24), dans lequel l'unité électronique de commande et de régulation comprend des moyens pour mettre en oeuvre un procédé selon l'une quelconque des revendications 1 à 12, **caractérisé en ce qu'**un procédé selon l'une quelconque des revendications 1 à 12 est mis en oeuvre dans l'unité électronique de commande et de régulation.

**Fig. 1**

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011029812 A1
- DE 102011076675

- WO 9713672 A1